# EUROPEAN PATENT APPLICATION

(11) **EP 2 341 241 A1**
(43) Date of publication of application: **06.07.2011**
(21) Application number: 09823115.2
(22) Date of filing: 26.10.2009
(51) Int. Cl.: F03D 1/06

(54) **A MULTIPLE-PANEL WIND GENERATOR BLADE WITH IMPROVED JOINTS ALONG THE TRAILING EDGE**

(30) Priority: 28.10.2008 ES 200803063
(71) Applicant: Gamesa Innovation & Technology, S.L., 31621 Sarriguren, Pamplona (ES)
(72) Inventor: GARCIA VIDORRETA, Enrique, E-31621 Sarriguren (ES)
(86) International application number: PCT/ES2009/070458
(87) International publication number: WO 2010/049560

(57) **Abstract**

A multi-panel wind turbine blade with improved joints on the trailing edge, with an aerodynamic profile with a leading edge (3), a trailing edge (5) and pressure and suction sides (7, 9) between the leading edge (3) and the trailing edge (5), where the transversal section of the edges of the prefabricated panels (31, 41) laid out on the pressure and suction side have a variable geometry on the trailing edge area (5) along the blade, with at least a first section (21) of the blade including its tip, in which the configuration of the edges of these panels (31, 41) includes some co-operating flattened surfaces (33, 43; 34, 44; 35, 45) to facilitate its adhesive bonding along the trailing edge (5). This variable geometry includes the possibility of using a third panel (51) on a blade section near to its root.

## Description

### FIELD OF THE INVENTION

This invention generally refers to wind turbine blades and more specifically to multi-panel blades with adhesive bondings on the trailing edge.

### BACKGROUND

Wind turbines include a rotor that supports one or several blades that are spread out radially to capture the wind's kinetic energy and cause a rotary movement of a power train connected to an electric generator to produce electrical power.

The amount of energy produced by the wind turbines depends on the blade rotor sweep surface that receives wind action, and consequently, increasing the length of the blades normally implies an increase in the wind turbine's energy production.

To facilitate the manufacturing of wind turbine blades the division of the blade into several panels has been proposed that can be manufactured individually perfectly and assembled later on to make up the blade. Some of the proposals known are the following.

EP 1 184 566 A1 describes a wind turbine blade that is made up assembling one, two or more longitudinal sections, each of which make up a central element made up by a longitudinal carbon fibre tube on which a series of transversal carbon fibre or fibre glass ribs are assembled connected to this central area and a carbon fibre or fibre glass cover connected to these ribs.

WO 01/46582 A2 describes a wind turbine blade that has a plurality of divided elements connected to the load transmission box beam and separated by gaskets that allow these divided elements movements between each other to minimise the traction forces in the blade region where these divided elements are situated.

The current trend in the industry for wind turbines with larger rotor blades requires new blade designs suitable for firstly complying with transport and quality conditions set out by large sized blades and secondly by the conditions set out by the manufacturing processes with a view to obtaining the maximum degree of automation.

### SUMMARY OF THE INVENTION

An object of this invention is to provide a wind turbine blade configuration that allows improving the control of the geometry of the blade's trailing edge.

Another object of this invention is to provide a wind turbine blade configuration that allows improving panel connection on the trailing edge.

Another object of this invention is to provide a wind turbine blade configuration that contributes to increasing the robustness of panel connections on the trailing edge.

These and other objects of this invention are achieved providing a wind turbine blade with an aerodynamic profile with a leading edge, a trailing edge and pressure and suction sides between the leading edge and trailing edge, the rear part of which consists of at least a first prefabricated panel on the pressure side and a second prefabricated panel on the suction side in which the configuration of the edges of these first and second panels includes flattened co-operating surfaces to facilitate its adhesive bonding along the trailing edge.

In a preferred embodiment of this invention, the edge of one of the two panels has the configuration of the trailing edge of the blade and its flattened surface is situated on an offset notch and on the other panel this flattened surface is situated on the edge. In another embodiment, these flattened co-operating surfaces are situated on the edges of the first and the second panel, and one of them is considerably thicker than the other. These configurations are suitable for the final section of the blade (although they may extend along the entire blade, particularly in short length blades) and allow improving the control of the geometry of the trailing edge of the blade.

In a preferred embodiment of this invention, these co-operating flattened surfaces are situated on the edges of the first and second panel so that the trailing edge is configured for connection, and both edges may have a similar thickness or one of them be considerably thicker than the other. These configurations are suitable for an intermediate section of the blade or near to its root and allow improving the control of the geometry of the blade's trailing edge.

In a preferred embodiment of this invention, in a section of the blade near to the root, the rear part of the blade also includes a third prefabricated panel that is joined to the edges of these first and second panels on the trailing edge which allows improving the control of the geometry of the blade's trailing edge, particularly in very long blades. A similar result is obtained equipping the first or second panel (or both) with flap shaped extensions.

Other characteristics and advantages of this invention can be inferred from the following detailed description regarding the accompanying figures.

### BRIEF DESCRIPTION OF FIGURES

Figure 1 is a schematic view in transversal section of a typical wind turbine blade.
Figures 2a and 2b are some schematic views in transversal section of the prefabricated panels used to make up two multi-panel blades.
Figure 3 is a schematic view of a wind turbine blade according to the preferred embodiment of this invention.
Figure 4 is a schematic plant view of a blade according to this invention showing the different areas and sections with a different configuration on the trailing edge.
Figures 5a, 5b, 5c and 5d are partial views in transversal section of the blade in Figure 3 by the C-C plane showing four possible variants of the embodiment of the invention.
Figures 6a, 6b and 6c are partial views in transversal section of the blade in Figure 3 by the B-B plane showing three possible variants of the embodiment of the invention.
Figure 7 is a partial view in transversal section of the blade in Figure 3 by the A-A plane showing a possible variant of the embodiment of the invention.
Figures 8a, 8b, 8c and 8d are partial views in transversal section of the blade in Figure 3 by the A-A plane showing four possible variants of the embodiment of the invention.

### DETAILED DESCRIPTION OF PREFERRED EMBODIMENTS

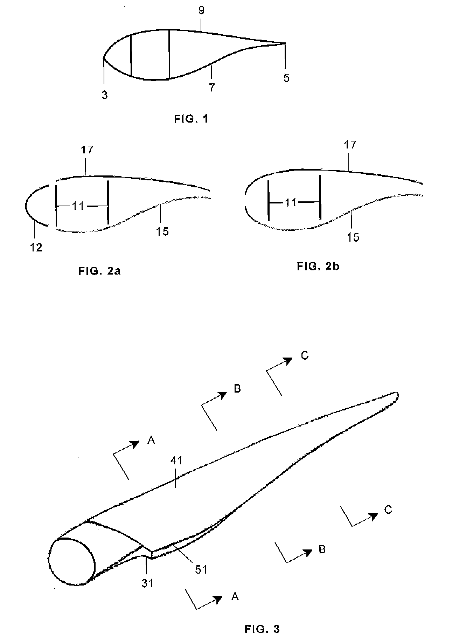

Figure 1 shows the typical aerodynamic profile of a wind turbine blade with a leading edge 3, a trailing edge 5 and pressure and suction sides 7, 9 between the leading edge 3 and the trailing edge 5 and Figures 2a and 2b show two possible multi-panel configurations.

In the case of Figure 2a, the blade components are two crossbeams 11, a front shell 12 and two rear shells 15 and 17 and in the case of Figure 2b the blade components are two crossbeams 11 and two shells 15, 17.

As is well known in the technique, a multi-panel blade has several advantages:
- It allows the use of different materials and/or manufacturing processes and/or structural configurations for each part of the blade according to its requirements, which optimises the cost of the blade.
- It makes quality control easier.
- It allows the blade manufacturer to organise its plans according to different criteria and subcontract the manufacturing of any of the parts if this is necessary.

This invention is applicable to the multi-panel configurations shown in Figures 2a and 2b and to any other configuration that includes panels on the rear area analogous to the shells 15, 17.

The basic idea of this invention is to configure the geometry of the prefabricated panels on the trailing edge so that, on the one hand, they include specific surfaces for making their adhesive bonding easier, and on the other that allow guaranteeing the required shape of the trailing edge. This implies that the transversal section of the panels has a variable geometry along the blade and that, even a third panel is used on a section of the blade near to its root.

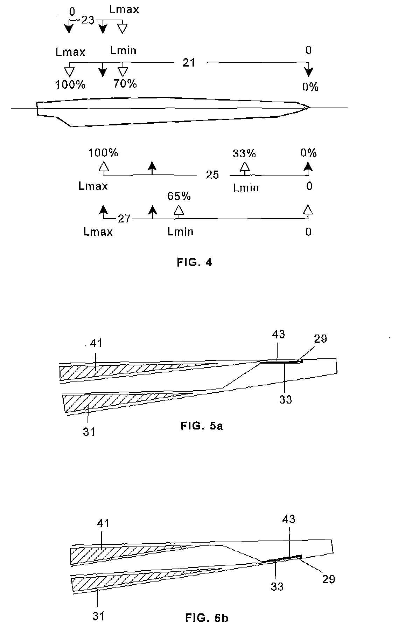

In this sense, and as illustrated in Figure 4, two sections 21, 23 and, inside the section 21, two areas 25, 27, can be distinguished that as we will detail below have the edges of their panels with a different transversal section and each one may have a different length (the white arrows in Figure 4 mark the ranges they move in).

In section 21, the length of which may range from 70% to 100% of the length of the blade, measured from its tip, the trailing edge is made gluing the two flattened surfaces on the edges of the panels 31, 41.

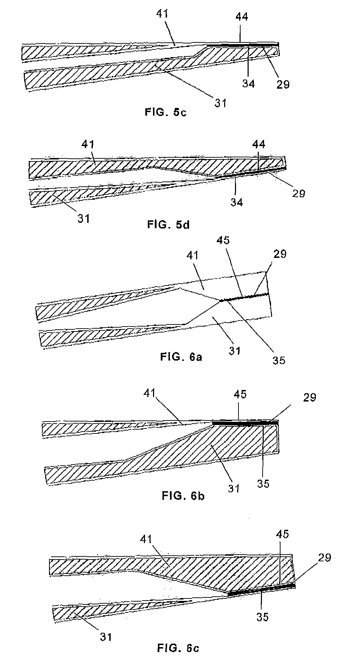

In area 25, the length of which may range from 33% to 100% of the length of section 21, and in the embodiments shown in Figures 5a and 5b, the blade's trailing edge is made up by one of the two panels 31, 41 to which the other panel 41, 31 is joined in an offset notch, and the connection on the co-operating flattened surfaces 33, 43 is made with the adhesive layer 29. In the embodiments shown in Figures 5c and 5d, the co-operating flattened surfaces 34, 44, that are joined with the adhesive layer 29, are situated on the edges of the first and second panel 31, 41 so that the trailing edge is configured by its joint, and the one of the edges is thicker than the other.

In area 27, the length of which may range from 65% to 100% of the length of section 21, and in the embodiment shown in Figure 6a, the edges of the first and second panel 31, 41, with a similar configuration, include some co-operating flattened surfaces 35, 45 on their edges to make it easier to joint them with the adhesive layer 29, and the blade's trailing edge is demarcated by the edges of the first and second panel 21, 31. In the embodiments shown in Figures 6b and 6c, one of the edges of the panels 31, 41 is thicker than the other.

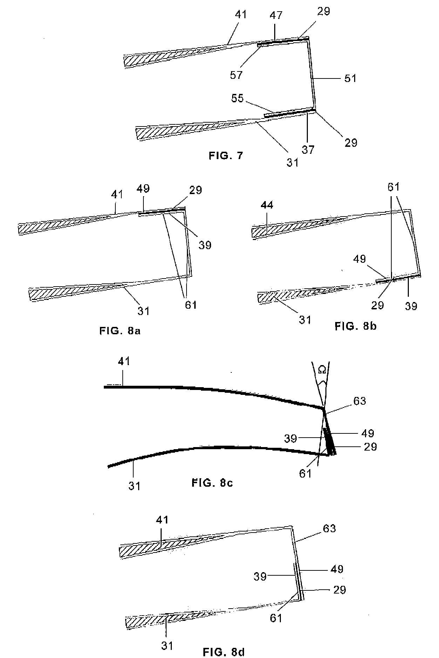

In section 23 the length of which may range from 1 % to 30% of the length of the blade measured from the root, and in the embodiment shown in Figure 7, the blade's edge is configured with the two rear panels 31, 41 and a third panel 51, that is U shaped with some wings 55, 57 and a web that decreases in height towards the tip of the blade (as can be seen in Figure 3). The edges of the first and second panel 31, 41 include some planed surfaces 37, 47 co-operating with the wings 45, 47 of the third panel 51 to facilitate a joint between them with the adhesive layers 29. The blade's trailing edge is thus demarcated by the third panel 51 and by the ends of the first and second panel 31, 41.

Likewise, in section 23, and as shown in Figures 8a, 8b, 8c and 8d, the blade's edge may be configured with the two panels 31, 41 including some flaps 61, 63 to make the flattened surfaces necessary for connection with an adhesive layer 29.

In the embodiment shown in Figure 8a the lower panel 31 is spread on a L shaped folded flap 61 on which a flattened area 39 that co-operates with the flattened area 49 of the upper panel 41 is situated.

In the embodiment shown in Figure 8b the upper panel 41 is spread on a L shaped folded flap 61 on which a flattened area 49 that co-operates with the flattened area 39 of the lower panel 31 is situated.

In the embodiment shown in Figure 8c the two panels 31, 41 are spread on folded flaps 61, 63 on which the flattened surfaces 39, 49 are situated that are joined with the adhesive layer 29 forming the direction of these flaps with the direction perpendicular to the blade profile rope, and angle Ω that in a preferred embodiment ranges from 0°-30°. Figure 8d shows the special case in which the direction of these flaps 61, 63 coincides with the direction perpendicular to the blade profile rope, i.e. when Ω=0°.

As an expert in this field will well understand, the term "co-operating flattened surfaces" used in the previous paragraphs should be understood in the widest sense as some surfaces suitably shaped for joints normally used in the wind industry and in particular for adhesive bondings.

These flattened surfaces and the schematised geometry in the Figures may be carried out in several ways, for example by machining and surfacing the geometry or using counter moulds in these areas of the parts.

The following advantages are worthy of mention among the advantages of this invention regarding the previous technique:
- Better assembly of the different panels to make the complete blade, due to the greater control in the surfaces to be connected and the adjacent geometry (lower tolerances).
- Drastic reduction in the finishing phase (cutting surplus material, polishing, reworks to obtain the correct aerodynamic profile, reinforcing the trailing edge's joint).
- Better control of the trailing edge's aerodynamic surface. This better control allows reducing the noise made by the blade (lower environmental impact) and also increasing the blade's efficiency, which results in an increase of the wind turbine's production under the same wind conditions.
- The geometry shown in Figures 5a, 5b, 5c and 5d reduces the concentration of stresses on the trailing edge, preventing premature failures in the adhesive bonding that occur with the current solution on the end part of the blade.

Although this invention has been described entirely in terms of preferred embodiments, it is clear that could be introduced modifications within its scope, not regarding the latter as limited by the embodiments described above, rather by the following claims.

## Claims

1. A wind turbine blade with an aerodynamic profile with a leading edge (3), a trailing edge (5) and pressure and suction sides (7, 9) between the leading edge (3) and the trailing edge (5), **characterised by** in at least a first section (21) of the blade, including its tip, its rear part including at least a first prefabricated panel (31) and on the pressure side and a second prefabricated panel (41) on the suction side in which the configuration of the edges of these first and second panels (31, 41) includes some co-operating flattened surfaces (33, 43; 34, 44; 35, 45) to facilitate its adhesive bonding along the trailing edge (5).

2. A wind turbine blade according to claim 1, **characterised by** the length of this first section (21) of the blade ranging from 70% to 100% of the length of the blade from its tip.

3. A wind turbine blade according to claim 2, **characterised by**, in a first area (23) of this first section (21), with a length ranging from 33% to 100% of the length of this first section (21), the edge of one these two panels (31, 41) having the configuration of the trailing edge (5) of the blade and its flattened surface (33, 43) situated on an offset notch and by the other panel (41, 31) having its flattened surface (43, 33) situated on its edge.

4. A wind turbine blade according to claim 2, **characterised by**, in a first area (25) of this first section (21), with a length ranging from 33% to 100% of the length of this first section (21), these co-operating flattened surfaces (34, 44) being situated on the edges of the first and the second panel (31, 41) so that the trailing edge (5) is configured for connection, with one of the edges thicker than the other.

5. A wind turbine blade according to claim 2, **characterised by**, in a second area (27) of this first section (21), with a length ranging from 65% to 100% of the length of this first section (21), these co-operating flattened surfaces (35, 45) being situated on the edges of the first and the second panel (31, 41) so that the trailing edge (5) is configured for connection.

6. A wind turbine blade according to claim 5, **characterised by** one of the edges of the first and second panel (31, 41) being thicker than the other.

7. A wind turbine blade according to claim 2, **characterised by** in a second section (23) of the blade next to its root also including a third prefabricated panel (51) that is joined to the edges of these first and second panels (31, 41) on the trailing edge (5).

8. A wind turbine blade according to claim 7, **characterised by** this third prefabricated panel (51) being U shaped and by in this second section (23) of the blade the edges of the first and second panel (31, 41) having some co-operating flattened surfaces (37, 47) with the wings (55, 57) of this third panel (51) to facilitate an adhesive bonding between them.

9. A wind turbine blade according to claim 2, **characterised by** in a second section (23) of the blade near to its root, the flattened surface (39, 49) of at least one of these two panels (31, 41) being situated on an extension (61) folded on its edge to be joined to the flattened surface (49, 39) of the other panel (41, 31).

10. A wind turbine blade according to claim 9, **characterised by** this extension (61) being L shaped so that this flattened surface (39, 49) is opposite the flattened surface (49, 39) of the other panel situated on its edge to be able to carry out its adhesive bonding.

11. A wind turbine blade according to claim 9, **characterised by** the flattened surface (49, 39) of the other panel also being situated on an extension (63) folded on its edge, so that both extensions (61, 63) face each other to carry out the adhesive bonding in a transversal direction to the blade profile rope.

12. A wind turbine blade according to claim 11, **characterised by** the direction of these extensions (61, 63) forming an angle Ω, ranging from 0°-30° with the direction perpendicular to the blade rope.

13. A wind turbine blade according to any of the claims 7-12, **characterised by** the length of this second section (23) of the blade ranging from 1% to 30% of the its length measured from the blade's root.
